# EUROPÄISCHE PATENTANMELDUNG

(11) **EP 1 806 916 A2**
(43) Veröffentlichungstag der Anmeldung: **11.07.2007**
(21) Anmeldenummer: 06025553.6
(22) Anmeldetag: 11.12.2006
(51) Int. Cl.: H04N 5/44

(54) **Fernsehempfänger mit einem Flachbildschirm**

(30) Priorität: 04.01.2006 DE 102006000890
(71) Anmelder: Micronas GmbH, 79108 Freiburg (DE)
(72) Erfinder: Sieben, Ulrich, 79279 Vörstetten (DE); Temerinac, Miodrag, 79194 Gundelfingen (DE)
(74) Vertreter: Göhring, Robert

(57) **Zusammenfassung**

Fernsehempfänger (1) mit einem Flachbildschirm (2), der für externe Anschlüsse (3.1-3.5), wie z. B. SCART-Buchsen (3.1, 3.5) oder Lautsprecheranschlüsse (3.2, 3.3), ein vom Fernsehempfänger räumlich getrenntes Geräteteil (4) aufweist, das über mindestens eine leistungsfähige Busverbindung (5, 6) mit dem Fernsehempfänger verbunden ist. Die Busverbindung 5, 6) ist für zu- und abzuführende Signale im räumlich getrennten Geräteteil (4) an erste Busschnittstellen (20, 40) und im Fernsehempfänger (1) an zweite Busschnittstellen (25, 45) angeschlossen.

## Beschreibung

Die Erfindung betrifft einen Fernsehempfänger mit einem Flachbildschirm. Derartige Fernsehempfänger eignen sich dazu, in der Art eines Bildes an eine Wand aufgehängt zu werden. Ein Nachteil bei dieser Montage ist, dass die an der Seite oder auf der Rückseite angebrachten Anschlussbuchsen nicht mehr ohne weiteres zur Verfügung stehen und vor allen Dingen die verschiedenen Signalleitungen zu den Lautsprechern, dem Videorekorder und dem DVD-Spieler durch die Wandmontage den optischen Eindruck stören. Die verschiedenen Kabel lassen sich zwar in einem auf die Wand aufbringbaren Kabelkanal unterbringen, dessen erforderliche Größe stört jedoch trotzdem.

Aufgabe der Erfindung ist es, hier Abhilfe zu schaffen. Dies erfolgt gemäß dem Patentanspruch 1 dadurch, dass der Fernsehempfänger für die externen Anschlüsse ein räumlich getrenntes Geräteteil aufweist, das mit dem eigentlichen Fernsehempfänger über ein leistungsfähiges Bussystem verbunden ist. Leistungsfähig heißt hierbei, dass die Busverbindung möglichst hochfrequent ist, um eine große Datenmenge über möglichst wenige Leitungen zu übertragen, sodass das Bussystem nur über wenige Busleitungen verfügt. Ein derartiger Bus ist im Vergleich zu den üblichen Kabelverbindungen unauffällig und kann auch leicht zwischen dem getrennten Geräteteil und dem Fernsehempfänger verlegt werden. Bei der Verwendung geeigneter Hochfrequenzbänder kann dieser Bus auch drahtlos ausgelegt werden. Da es sich nur um die Überbrückung relativ geringer Distanzen handelt, ist die erforderliche Sendeleistung gering. Außer der Übertragung von Video- und Audiosignalen sind auch Steuersignale zu übertragen, die der Fernsehempfänger über ein Infrarotsensorelement empfängt. Die Steuersignale sind dabei nicht nur dem eigentlichen Fernsehempfänger zugeführt, sondern führen auch in dem getrennten Geräteteil und den daran angeschlossenen Geräten Steuerfunktionen durch.

Die Erfindung und vorteilhafte Ausführungen werden nun anhand der Figuren der Zeichnung näher erläutert:
Fig. 1 zeigt schematisch einen Flachbildschirmfernsehempfänger mit einem räumlich getrennten Geräteteil nach der Erfindung und
Fig. 2 zeigt schematisch als Blockschaltbild die wesentlichen Funktionseinheiten der Busverbindung zwischen dem getrennten Geräteteil und dem Fernsehempfänger.

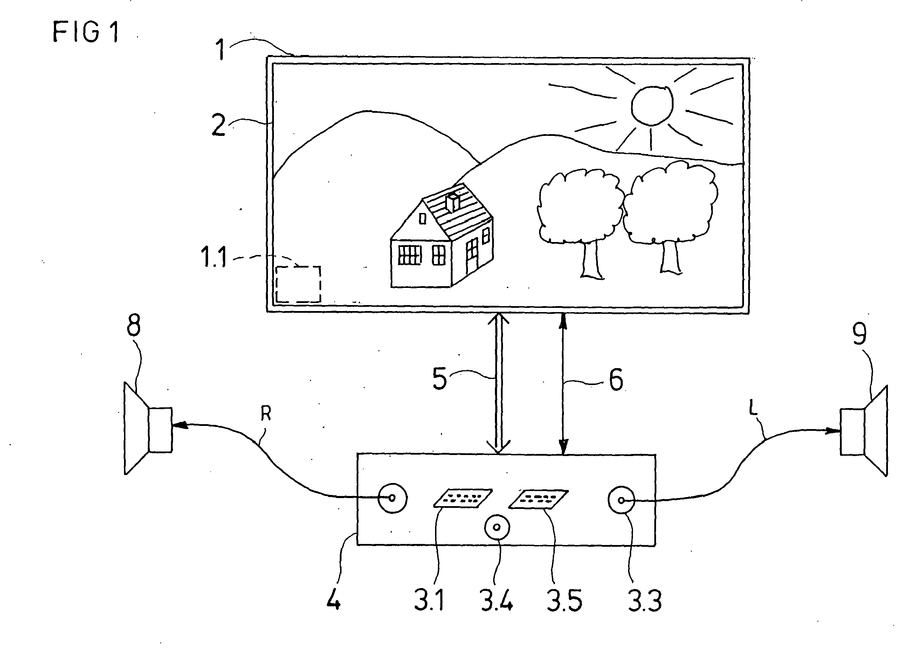

Fig. 1 zeigt schematisch in Frontalsicht einen Fernsehempfänger 1 mit einem zugehörigen Flachbildschirm 2. Derartige Flachbildschirme erlauben eine geringe Bautiefe des Fernsehempfängers, der damit auch wie ein Bild auf einer Wand aufgehängt werden kann. Die zugehörige Elektronik lässt sich ohne weiteres in dem flachen Fernsehempfänger unterbringen. Schwierigkeiten machen jedoch die Lautsprecher und die verschiedenen Anschlussbuchsen 3.1 bis 3.5 für externe Geräte. Im Prinzip können diese Anschlussbuchsen nach wie vor auf der Rückseite des flachen Fernsehempfängers 1 oder an dessen Seitenflächen eingelassen sein und sind damit von vorne unsichtbar. Bei einer Wandmontage stören jedoch die anzuschließenden Kabel und zugehörigen Stecker den Gesamteindruck, besonders wenn die Kabel auf der Rückseite geführt werden müssen, weil dann der Fernsehempfänger von der Wand abgerückt werden muss.

Durch die räumliche Trennung der Anschlussbuchsen 3.1 bis 3.5 vom eigentlichen Fernsehempfänger 1 nach der Erfindung unter Verwendung eines breitbandigen Busses 5 für die Video- und Audiosignale, eines einfachen Steuerbusses 6 für Steuersignale und eines getrennten Geräteteils 4 zur Aufnahme aller oder zumindest der besonders störenden Anschlussbuchsen werden diese Nachteile behoben. Im Geräteteil 4 oder im Fernsehempfänger 1 werden die Signale in Bussignale umgesetzt, die in jedem Fall als Daten über die Busverbindungen 5, 6 auf die andere Seite übertragen und dort in der Regel wieder in die ursprünglichen Signale zurückgewandelt werden. Selbstverständlich kann der Fernsehempfänger 1 dabei unabhängig von den Buchsen in dem getrennten Geräteteil 4 auch über eigene Anschlussbuchsen verfügen, die bei einer anderen Aufstellungsweise des Fernsehempfängers verwendbar sind.

Über den breitbandigen Bus 5, der nur über wenige Busleitungen verfügt, beispielsweise zwischen zwei bis fünf, werden Audio-und Videosignale übertragen. Über den Steuerbus 6 werden Steuersignale übertragen. Die Steuersignale stammen entweder aus einem Sensorelement 1.1, das von einer Fernbedienung angesteuert wird, dem Fernsehempfänger 1, dem getrennten Geräteteil 4 oder einem der daran angeschlossenen Geräte.

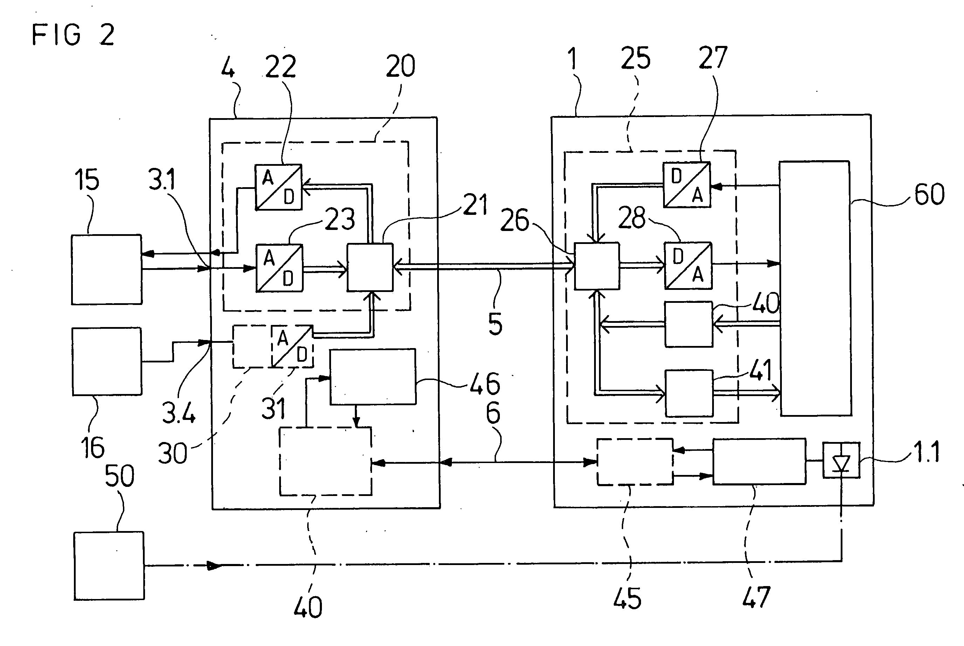

Das getrennte Geräteteil 4 enthält beispielsweise eine erste und zweite SCART-Buchse 3.1, 3.5 zum Anschluss eines Videorekorders und eines DVD-Spielers (SCART = "Syndicat des Constructeurs d'Appareiles Radio Recepteurs et Televiseurs" und DVD = "Digital Versatile Disc"). Ferner ist eine Lautsprecherbuchse 3.2 vorhanden, die ein rechtes Audiosignal R an einen Lautsprecher 8 liefert und eine Lautsprecherbuchse 3.3, die ein linkes Audiosignal L an einen Lautsprecher 9 liefert. Bei Raumklangsystemen kommen noch weitere Lautsprecherbuchsen hinzu. Für die Lautsprecherbuchsen sind Leistungsstufen im Geräteteil 4 erforderlich, wenn nicht aktive Lautsprecherboxen 8, 9 verwendet werden. Das getrennte Geräteteil 4 kann ferner eine Antennenbuchse 3.4 enthalten, über die ein hochfrequentes Antennensignal aus einer Antennenanlage oder einem Satellitenempfänger 16 (vgl. Fig. 2) zugeführt wird.

Fig. 2 zeigt schematisch als Blockschaltbild das Bussystem 5, 6 nach der Erfindung mit den zugehörigen Busschnittstellen 20, 40, 25, 45. Der getrennte Geräteteil 4 enthält für den breitbandigen Bus 5 eine erste Busschnittstelle 20, der eine zweite Busschnittstelle 27 im Fernsehempfänger 1 entspricht. Dem relativ langsamen Steuerbus 6 ist im getrennten Geräteteil 4 die erste Busschnittstelle 40 und im Fernsehempfänger 1 die zweite Busschnittstelle 45 zugeordnet.

Als Beispiel ist ein Videorekorder 15 mit seinen Ein- und Ausgängen über eine SCART-Buchse 3.1 an die erste Busschnittstelle 20 angeschlossen. Zur Vereinfachung sind von den 21 Kontakten der SCART-Buchse 3.1 lediglich eine Eingangs- und eine Ausgangsleitung dargestellt. Die eigentliche Sende- und Empfangseinrichtung für den breitbandigen Bus 5 ist in der ersten Busschnittstelle 20 der Schaltungsblock 21 und in der zweiten Busschnittstelle 25 der Schaltungsblock 26. Diese Schaltungsblöcke empfangen über den Bus 5 digitale Daten oder senden solche. Sollen analoge Signale über den Bus 5 übertragen werden, dann werden diese digitalisiert. Im Ausführungsbeispiel von Fig. 2 ist dies der Analog-Digitalumsetzer 23. Auf der anderen Seite des Busses 5, also in der zweiten Busschnittstelle 25, findet dann mittels eines Digital-Analogumsetzers 28 die Rückwandlung statt. Für den umgekehrten Signalweg enthält die zweite Busschnittstelle 25 einen Analog-Digitalumsetzer 27 und die erste Busschnittstelle 20 einen zugehörigen Digital-Analogumsetzer 22.

An die zweite Busschnittstelle 25 ist eine Video- und Tonsignalverarbeitungseinrichtung 60 angeschlossen. Da moderne Fernsehempfänger intern in der Regel eine digitale Signalverarbeitung aufweisen, ist sinnvoll, dass der Schaltungsblock 60 auf dem Bus 6 außer analogen Signalen auch Daten senden oder empfangen kann. Daten fallen in der Verarbeitungseinheit 60 in der Regel als parallele Bitströme von 8 bis 32 Bitbreite an, die natürlich ungeeignet für eine direkte Übertragung über den Bus 5 sind. Zur Anpassung an die hohe Datenrate und geringe Bitbreite des Busses 5 sind Codeumsetzer 40 bzw. 41 erforderlich. Durch die hohe Datenrate lässt sich die Bitbreite der Audio- oder Videodaten reduzieren. Bei einer rein seriellen Übertragung einzelner Bits ist die Anzahl von Busleitungen am geringsten und ein verdrilltes Leitungspaar mit geeigneten Übertragungseigenschaften reicht als Zweidrahtbusleitung aus. Werden über die erste Busschnittstelle 20 digitale Daten von außen empfangen oder nach außen abgeführt, dann sind dort ebenfalls Codeumsetzer erforderlich.

In Fig. 2 ist ein Satellitenempfänger 16 an die Antennenbuchse 3.4 angeschlossen. Deren Signal wird mittels einer Frequenzumsetzungseinrichtung 30 in eine tiefere Frequenzlage gebracht und dann mittels eines Analog-Digitalumsetzers 31 digitalisiert. Diese Daten werden der Sende- und Empfangseinrichtung 21 zugeführt, die sie über den Bus 5 an den Fernsehempfänger 1 weitergibt. Bei der Analog-Digitalumsetzung in den Umsetzern 23, 31 ist der Digitalisierungsakt zweckmäßigerweise an die Datenrate des Busses 5 angepasst.

Der langsame Steuerbus 6 mit seiner ersten und zweiten Busschnittstelle 40, 50 ist mit einer Steuereinrichtung 46 in dem Geräteteil 4 bzw. einer Steuereinrichtung 47 im Fernsehempfänger 1 verbunden. Beispielsweise liefert das IR-Sensorelement 1.1 Steuersignale, die in der Steuereinrichtung 47 dekodiert werden. Sofern diese Steuersignale den Geräteteil 4 oder die daran angeschlossenen Geräte 15, 16 betreffen, werden die Steuersignale in der zweiten Busschnittstelle 45 in Daten umgesetzt und über den Bus 6 auf die erste Busschnittstelle 40 übertragen, die eine Rückumsetzung durchführt, wodurch Steuersignale für die Steuereinrichtung 46 erzeugt werden. Die Infrarot-Steuersignale für das Sensorelement 1.1 stammen aus einem Fernbedienungsgeber 50. Das Sensorelement 1.1 kann zwar auch dem Geräteteil 4 zugeordnet werden, allerdings ist das ungünstig, weil das Geräteteil 4 gegenüber dem Fernsehempfänger aus optischen Gründen möglichst versteckt untergebracht werden soll.

Das System mit dem breitbandigen Bus 5 und den zugehörigen Busschnittstellen 20, 25 vereinfacht sich sehr, wenn die bidirektionale Ausbildung des Busses 5 in zwei unidirektionale Busse mit entsprechenden Schnittstellen aufgespalten wird. Dies erfordert bei einer genügend hohen Übertragungsrate beispielsweise zwei verdrillte Leitungspaare, die gegenüber den ursprünglichen Leitungen immer noch sehr unauffällig sind. Es entfallen dann alle üblichen Maßnahmen zur Vermeidung von Konflikten, wenn beide Busschnittstellen 20, 25 gleichzeitig auf den Bus 5 zugreifen wollen. Zudem halbiert sich die erforderliche Datenrate durch die Aufspaltung.

In Fig. 2 ist der Steuerbus 6 als separater Bus dargestellt. Da es sich aber hierbei um Austausch von relativ wenigen Daten handelt, können diese auch ohne weiteres den Audio- und Videodaten auf dem Breitbandbus 5 überlagert werden. Geeignet ist hierfür ein separater Datenbereich der übertragenen Datenpakete oder ein Bereich innerhalb der Kopfinformation. Da die übertragenen Daten unterschiedliche Anschlüsse betreffen und innerhalb dieser Anschlüsse auch noch unterschiedliche Kontaktstifte, ist es sowieso erforderlich, den übertragenen Daten unter anderem eine Adresseninformation mitzugeben. Dies erfolgt bei den üblicherweise verwendeten Paketinformationen in der Kopfinformation.

## Patentansprüche

1. Fernsehempfänger (1) mit einem Flachbildschirm (2),
**dadurch gekennzeichnet, dass** der Fernsehempfänger für externe Anschlüsse (3.1 bis 3.5), wie z. B. SCART-Buchsen (3.1, 3.5) oder Lautsprecheranschlüsse (3.2, 3.3), ein vom Fernsehempfänger räumlich getrenntes Geräteteil (4) aufweist, das über mindestens eine Busverbindung (5, 6) mit dem Fernsehempfänger (1) verbunden ist, wobei die Busverbindung (5, 6) über erste Busschnittstellen (20, 40) an die externen Anschlüsse im räumlich getrennten Geräteteil (4) und über zweite Busschnittstellen (25, 45) an den Fernsehempfänger (1) angeschlossen ist.

2. Fernsehempfänger (1) nach Anspruch 1,
**dadurch gekennzeichnet, dass** in den ersten (20, 40) bzw. zweiten Busschnittstellen (25, 45) mindestens ein Analog-Digitalumsetzer (23, 27) für die Digitalisierung analoger Signale vor der Busübertragung und mindestens ein Digital-Analogumsetzer (28, 22) für die Rückumsetzung nach der Busübertragung vorhanden sind.

3. Fernsehempfänger (1) nach Anspruch 1,
**dadurch gekennzeichnet, dass** mit der ersten und zweiten Busschnittstelle (20, 25) für die Busverbindung (5) ein erster Datenumsetzer 40) verkoppelt ist, der die Bitbreite digitaler Signale vor der Busübertragung reduziert und ein zweiter Datenumsetzer (41) die Bitbreite nach der Busübertragung vergrößert, wobei die Datenrate bei der Bitbreitenreduktion erhöht und bei der Bitbreitenvergrößerung erniedrigt wird.

4. Fernsehempfänger (1) nach Anspruch 1 oder 3,
**dadurch gekennzeichnet, dass** die Busverbindung (5, 6) weniger als 6 Busleitungen aufweist.

5. Fernsehempfänger (1) nach Anspruch 1 oder 3,
**dadurch gekennzeichnet, dass** die Busverbindung (5, 6) drahtlos ist.

6. Fernsehempfänger (1) nach Anspruch 3 oder 4,
**dadurch gekennzeichnet, dass** die Busverbindung (5, 6) als Busleitung mindestens ein verdrilltes Leitungspaar enthält.

7. Fernsehempfänger (1) nach Anspruch 1,
**dadurch gekennzeichnet, dass** das räumlich getrennte Geräteteil (4) einen Anschluss für ein Antennensignal (3.4) und eine Verarbeitungseinheit (30, 31) für das Antennensignal aufweist.

8. Fernsehempfänger (1) nach Anspruch 7,
**dadurch gekennzeichnet, dass** die Verarbeitungseinheit (30, 31) einen Frequenzumsetzer (30) und eine daran angeschlossene Digitalisierungsstufe (31) enthält.
